Europäisches Patentamt

European Patent Office

Office européen des brevets

(11) Publication number: **0 224 370**
A2

(12) # EUROPEAN PATENT APPLICATION

(21) Application number: **86308986.8**

(22) Date of filing: **18.11.86**

(51) Int. Cl.⁴: **C 04 B 26/02**
//(C04B26/02, 16:08)

(30) Priority: **18.11.85 US 799231**

(43) Date of publication of application:
**03.06.87 Bulletin 87/23**

(84) Designated Contracting States:
**AT BE CH DE ES FR GB IT LI NL SE**

(71) Applicant: **THE DOW CHEMICAL COMPANY**
**2030 Dow Center Abbott Road P.O. Box 1967**
**Midland, MI 48640(US)**

(72) Inventor: **Cunningham, William C.**
**1009 Wimberly**
**Angleton Texas 77515(US)**

(72) Inventor: **Ramsey, Randy A.**
**618 Dogwood**
**Lake Jackson Texas 77566(US)**

(72) Inventor: **Autenrieth, Randal E.**
**115 Pin Oak**
**Lake Jackson Texas 77566(US)**

(74) Representative: **Burford, Anthony Frederick et al,**
**W.H. Beck, Greener & Co. 7 Stone Buildings Lincoln's Inn**
**London WC2A 3SZ(GB)**

(54) Process for the preparation of polymer concrete having low shrinkage.

(57) Polymer concretes having little or no shrinkage and high compressive strength and improved bond are prepared by:
A) mixing a current catalyst with an unsaturated resin selected from the group consisting of unsaturated polyesteramide resins, unsaturated polyester resins and unsaturated vinylester resins dissolved in one or more ethylenically unsaturated monomers to provide a catalyzed resin,
B) mixing said catalyzed resin with finely divided polystyrene, coarse and fine aggregates, and fillers to provide a curable polymer concrete blend, and
C) curing said concrete blend.

EP 0 224 370 A2

0224370

## PROCESS FOR THE PREPARATION OF POLYMER CONCRETE HAVING LOW SHRINKAGE

This invention relates to a method of preparing polymer concrete wherein polystyrene is added after the polymer is catalyzed.

It is known from U.S. patents 4,228,251, 4,233,413 and 4,309,519 that polystyrene can be used to impart low shrink properties to polyester compositions.

U.S. patent 4,371,639 discloses polymer concretes prepared with fly ash.

The present invention is based on the discovery that the time of addition of the polystyrene to the polymer concrete is critical in obtaining little or no shrinkage with a high compressive strength and improved bond strength.

The present invention concerns a process for the preparation of a polymer concrete having little or no shrinkage and with high compressive strength and improved bond strength which comprises the steps of

34,379-F                    -1-

A)	mixing a curing catalyst with an unsaturated resin selected from the group
consisting of unsaturated polyesteramide
resins, unsaturated polyester resins and
unsaturated vinylester resins dissolved
in one or more ethylenically unsaturated
monomers to provide a catalyzed resin,

B)	mixing said catalyzed resin with finely
divided polystyrene, coarse and fine
aggregates, and fillers to provide a
curable polymer concrete blend, and

C)	curing said concrete blend.

Polymer concrete is a composition made by blending of a curable resin component and an aggregate component. The polymer concrete composition is prepared by blending from 2 percent to 20 percent by weight of a polymer composition with from 98 to 80 percent by weight of an aggregate component. The aggregate component is typically sand, gravel, crushed stone or rock, silica flour, fly ash, or mixtures thereof. Up to 50 percent by weight of metal fines, glass fibers, synthetic fibers, glass reinforcing mats, metal turnings, metal fibers, hydrated alumina, ceramic beads or mixtures thereof may be present in the aggregate composition. The exact components used in the aggregate composition are generally dictated by the physical properties required of the cured polymer concrete composition. Thus, optimal aggregate particle size distribution and physical configuration can be determined by simple preliminary experiments. U.S. patent 4,371,639 discloses the usual components for making polymer concrete.

The polymers used in this invention are blended with ethylenically unsaturated monomers that are compatible therewith. Typical of the monomers are vinyl monomers such as alkenyl aromatics, such as styrene, divinylbenzene or vinyltoluene. Acrylic monomers, although less preferred, may also be used separately or in conjunction with the monomer.

Typical of the acrylic monomers are methylmethacrylate or dicyclopentadiene acrylate. Other useful vinyl monomers will be known to the skilled worker. The vinyl monomer, frequently called a reactive diluent, may be employed within a wide range of concentration of from 20 to 80 wt percent of diluent to 80 to 20 wt percent of the resin. The optimum amount will depend in large measure on the polymer used, the diluent and the properties desired in the uncured and the cured states. Reactive diluents are employed principally to adjust the viscosity of a resin blend to permit its facile use in a given fabrication procedure.

The unsaturated polymer aggregate blends or mixtures are curable by known catalyst systems. Peroxides, such as methyl ethyl ketone peroxides, can be used with or without known promoters, such as cobalt octoate or cobalt naphthenate, that function with such peroxides. Acyl peroxides, such as benzoyl peroxides can be used with or without promoters such as tertiary amines, including typically dimethyl aniline and N,N-dimethyl-p-toluidine. The concentrations of catalyst and promoter are adjusted within known limits of from 0.1 to 3.0 weight percent depending on the rate of cure desired, the magnitude of the generated exotherm and for other known purposes. Known gelation retarding agents, such as p-benzoquinone, can be employed in the curing system.

The norbornyl modified unsaturated polyesteramides used in the instant invention are known from U.S. Patent 4,410,686.

The vinyl terminated urethane oligomers and polyesteramides containing them used herein are disclosed in WO 86/03757 (EPA 85902254.3). These polyesteramides can contain 0.1 to 60 percent by weight of the above oligomers. Further teachings of these oligomers are set forth in U.S. 4,524,178.

For the purposes of this invention finely divided polystyrene is defined to mean having a size range from a 5 micrometre sieve to a 1/4 inch (6 mm) sieve. Preferably, the size is anything less than 100 micrometres.

The following examples are given to illustrate the invention and not to limit the scope of the invention. All parts and percentages are by weight unless otherwise specified.

### Control A

Three linear shrinkage test pieces were made according to ASTM C-531 in one by one by ten inch (2.5 by 2.5 by 25 cm) molds. A dicyclopentadiene modified polyesteramide resin made in accordance with U.S. Patent 4,410,686 was used to make the above test pieces from a 1275 gram batch of polymer concrete. A 127.5 grams sample of the resin (10 percent of the batch) was catalyzed with 2.55 grams methyl ethyl ketone peroxide and 1.27 grams of 6 percent cobalt napththenate solution. The resin sample contained 43 percent styrene as a reactive diluent. At this catalyst level, the resin will gel in about 15 minutes at 23°C.

To the catalyzed resin, the following components were added with stirring:

116.9 gms (9.17 percent) of 200 - 400 mesh U.S. Standard Sieve silica flour; 231.7 gms (18.17 percent) of number 5 blasting sand; 792.5 gms (62.16 percent) of 1/8 - 1/4 inch (0.31-0.64 cm) gravel; and 6.4 gms (0.5 percent) of 1/8 inch (0.31 cm) chopped fiberglass strand. Number 5 sand is 5 mesh U.S. Standard Sieve size (4 mm opening).

The mixture was placed in the molds and cured for 16 hours at 23°C.

The samples were then post-cured in an oven at 65°C for 16 hours and then cooled to room temperature (23°C). The samples were then measured and the percent linear shrinkage was calculated based on the original length and the length after cure at 65°C. The results are set forth in Table I as the average of the three test pieces.

Examples 1 to 4

In a manner similar to Control A, other test pieces were molded and tested in duplicate except that various amounts of powdered polystyrene were added with the aggregate and the fiberglass was omitted. The results of these duplicate tests were averaged and reported in Table I.

34,379-F

## Table I
## Polyesteramide Resin Concrete

| % Linear Runs | % Resin | % S.F.[1] | % Sand[2] | % Gravel[3] | % P.S.[4] | Shrinkage |
|---|---|---|---|---|---|---|
| Control A | 10 | 9.17 | 18.17 | 62.16 | 0 | 0.26 |
| Ex. 1 | 10 | 8.85 | 17.7 | 61.96 | 1.48 | 0.14 |
| Ex. 2 | 10 | 8.80 | 17.61 | 61.63 | 1.96 | 0.11 |
| Ex. 3 | 10 | 8.75 | 17.5 | 61.25 | 2.50 | 0.09 |
| Ex. 4 | 10 | 8.67 | 17.33 | 60.67 | 3.33 | 0.04 |

NOTES: Control had 0.5% chopped fiberglass
[1]S.F. is silica flour
[2]Sand is number 5 blasting sand
[3]Gravel is 1/8 - 1/4 inch (0.31-0.64 cm) gravel
[4]P.S. is finely divided polystyrene (16 mesh U.S. Standard Sieve; 1.19 mm opening).

## Control B

The procedure of Control A was repeated using a dicyclopentadiene modified polyesteramide resin composition containing 20 percent of a vinyl terminated urethane oligomer which is the reaction product of hydroxy propylacrylate, toluene diisocyanate, and a 3000 molecular weight polyglycol made from propylene oxide (PO), ethylene oxide (EO), and glycerine containing 92 percent PO and 8 percent EO, and 49 percent of styrene. A 13638 gram batch was made up using 1363.8 gms (10 percent) of the above resin composition. This was catalyzed with 2 percent methyl ethyl ketone peroxide, 1 percent cobalt naphthenate solution, and 0.1 percent N,N-dimethyl para toluidine as in Control A.

Following the procedure of Control A, 9.17 percent silica flour, 18.16 percent of number 5 blasting sand, 62.17 percent of 1/8 to 1/4 inch (0.31-0.64 cm) gravel, and 0.5 percent of 1/8 inch (0.31 cm) chopped fiberglass was added to the catalyzed resins and the mixture was molded and cured into test bars. Five test bars were made and the shrinkage reported in Table II is the average.

Examples 5 to 12

The procedure of Control B was repeated with the addition of various amounts of powdered polystyrene with the aggregate and omission of fiberglass. The results are set forth in Table II. Examples 5,6,7 and 9 were in duplicate. Examples 8 and 12 were repeated five times and averaged. Examples 10 and 11 were repeated eight times and averaged.

### Table II
### Modified Polyester Amide Resin Concrete

|  | % Resin | % S.F.[1] | % Sand[2] | % Gravel[3] | % P.S.[4] | % Linear Shrinkage |
|---|---|---|---|---|---|---|
| Control B | 10 | 9.17 | 18.16 | 62.17 | 0 | 0.33 |
| Ex. 5 | 10 | 8.85 | 17.7 | 61.96 | 1.48 | 0.05 |
| Ex. 6 | 10 | 8.80 | 17.61 | 61.63 | 1.96 | 0.05 |
| Ex. 7 | 10 | 8.75 | 17.50 | 61.25 | 2.50 | 0.02 |
| Ex. 8 | 10 | 8.72 | 17.43 | 61.03 | 2.82 | (-)0.27 |
| Ex. 9 | 10 | 8.67 | 17.33 | 60.67 | 3.33 | (-)0.11 |
| Ex. 10 | 11 | 8.6 | 17.2 | 60.1 | 3.1 | (-)0.13 |
| Ex. 11 | 13 | 8.3 | 16.7 | 58.3 | 3.7 | (-)0.14 |
| Ex. 12 | 15 | 8.1 | 16.2 | 56.5 | 4.2 | (-)0.28 |

NOTE: Control had 0.5% chopped fiberglass
[1]S.F. is silica flour
[2]Sand is number 5 blasting sand
[3]Gravel is 1/8 - 1/4 inch (0.31-0.64 cm) gravel
[4]P.S. is finely divided polystyrene (16 mesh U.S. Standard Sieve)
(-) Denotes negative shrinkage or expansion

## Control C

The procedure of Control A was repeated using an unsaturated orthophthalic polyester resin (Polylite® Polyester Resin 32-125) from Richold Chemicals, Inc. A 1275 gram batch was made using 127.5 gms (10 percent) of the above resin. This was catalyzed, as in Control A, with 2 percent methyl ethyl ketone peroxide. The resin, as purchased, was pre-promoted with cobalt napthenate at an undisclosed level.

Following the procedure of Control A, 9 percent silica flour, 18 percent of number 5 blasting sand, and 63 percent of 1/8 to 1/4 inch (0.31-0.64 cm) gravel was added to the catalyzed resin and the mixture was molded and cured into test bars. Three test bars were made and the shrinkage reported in Table III is the average.

## Control D

The procedure of Control A was repeated using an unsaturated orthophthalic polyester resin (Polylite® Polyester Resin 32-125) from Reichold Chemicals, Inc.

34,379-F

A 1647 gram batch was made using 187 gms (11.3 percent) of the above resin. This was catayzed as in Control A with 1 percent methyl ethyl ketone peroxide. The resin, as purchased was pre-promoted with cobalt naphthenate at an undisclosed level.

Following the procedure of Control A, 8.9 percent silica flour, 17.7 percent of number 5 blasting sand, and 62.1 percent of 1/8 to 1/4 inch (0.31-0.64 cm) gravel was added to the catalyzed resin and the mixture was molded and cured into test bars. Four test bars were made and the shrinkage reported in Table III is the average.

In the following Examples, the polystyrene employed was finely divided polystyrene passing 16 mesh U.S. Standard Sieve.

Example 13

The procedure of Control C was repeated with the addition of 1.1 percent polystyrene with the aggregate. The resulting average of three test bars is set forth in Table III.

Example 14

The procedure of Control D was repeated with the addition of 3.1 percent polystyrene. The resulting average of four test bars is set forth in Table III.

## Table III
### Orthophthalic Polyester Resin Concrete

| Runs | % Resin | % S.F. | % Sand | % Gravel | % P.S. | % Linear Shrinkage |
|------|---------|--------|--------|----------|--------|--------------------|
| Control C | 10 | 9 | 18 | 63 | 0 | 0.22 |
| Ex. 13 | 10 | 8.9 | 17.8 | 62.2 | 1.1 | 0.16 |
| Control D | 11.3 | 8.9 | 17.7 | 62.1 | 0 | 0.26 |
| Ex. 14 | 11 | 8.6 | 17.2 | 60.1 | 3.1 | 0.10 |

### Control E

The procedure of Control A was repeated using an unsaturated elastomer-modified vinyl ester resin (DERAKANE® 8084) from The Dow Chemical Company. A 1800 gram batch was made using 198 gms (11 percent) of the above resin. This was catalyzed with 1.75 percent methyl ethyl ketone peroxide and 0.5 percent cobalt napthenate solution as in Control A.

Following the procedure of Control A, 8.9 percent silica flour, 17.8 percent number 5 blasting sand, and 62.3 percent 1/8 to 1/4 inch (0.31-0.64 cm) gravel was added to the catalyzed resin and the mixture was molded and cured into test bars. Four test bars were made and the shrinkage reported in Table IV is the average.

### Example 15

The procedure of Control E was repeated with the addition of 3.1 percent polystyrene. The resulting average of four test bars is set forth in Table IV.

### Table IV

| Runs | % Resin | % S.F. | % Sand | % Gravel | % P.S. | % Linear Shrinkage |
|---|---|---|---|---|---|---|
| Control E | 11 | 8.9 | 17.8 | 62.3 | 0 | 0.35 |
| Ex. 15 | 11 | 8.6 | 17.2 | 60.1 | 3.1 | 0.04 |

### Example 16

The resin composition of Example 4 was used to make two by two by two inch (5 by 5 by 5 cm) polymer concrete cubes in accordance with ASTM C-579. Three cubes were made and tested for compressive strength. The procedure used was the same as the above controls and examples wherein the polystyrene is added after the resin is catalyzed. As a control, the polystyrene was added to the resin before the catalyst was added. This designated as Control F. The results are shown in Table V where the values in pounds per square inch (kPa) are an average of three samples.

### Table V

| Sample | Compressive Strength(psi) |
|---|---|
| Ex. 16 | 13437 (92648 kPa) |
| Control F | 10542 (72687 kPa) |

Table V shows that the time of the addition of polystyrene is important to the compressive strength of the polymer concrete.

Control G

Bond strength test specimens were made utilizing a modified version of ASTM C882-78. A single cured diagonally cast portland cement concrete half cylinder was sandblasted and placed in a 3" x 6" (7.5 cm x 15 cm) cylindrical mold with the slant side up. The cylinders were placed on a vibrating table and polymer concrete was then added to the mold in two lifts of approximate equal volume. Each layer was rodded with 25 strokes of a 3/8" (0.95 cm) tamping rod. The surface of the top layer was then struck off to be level with the mold.

Test specimens were made as described above from a 3000 gram batch of polymer concrete using the resin of Control A. A 330.0 gram (11 percent) sample of the resin was catalyzed with 2 percent methyl ethyl ketone peroxide and 1 percent cobalt napthenate solution as in Control A.

Following the procedure of Control A, 8.9 percent silica flour, 17.8 percent of number 5 blasting sand, and 62.3 percent of 1/8 to 1/4 inch (0.31-0.64 cm) gravel was added to the catalyzed resin and the mixture was molded and cured for 16 hours at 23°C. The samples were then post cured in an oven at 65°C for 16 hours and then cooled to room temperature (23°C). Three test specimens were made and the bond strength (psi) (kPa) and percent bonding reported in Table VI is the average.

Example 17

The procedure of Control G was repeated with the addition of 3.1 percent polystyrene. The resulting averages of three specimens are set forth in Table VI.

## Control H

The procedure of Control G was repeated using the resin of Control B to make a 3000 gram batch of polymer concrete. A 330.0 gram (11 percent) sample of the resin was catalyzed with 2 percent methyl ethyl ketone peroxide and 1 percent cobalt napthenate solution as in Control A.

Following the procedure of Control A, 8.9 percent silica flour, 17.8 percent of number 5 blasting sand, and 62.3 percent of 1/8 to 1/4 inch (0.31-0.64 cm) gravel was added to the catalyzed resin and the mixture was molded and cured for 16 hours at 23°C. The samples were then post cured in an oven at 65°C for 16 hours and then cooled to room temperature (23°C). Three test specimens were made and the bond strength (psi) (kPa) and percent bonding reported in Table VI is the average.

## Example 18

The procedure of Control H was repeated with the addition of 3.1 percent polystyrene. The resulting averages of three specimens are set forth in Table VI.

## Control I

The procedure of Control G was repeated using a dicyclopentadiene-modified polyesteramide resin made in accordance with U.S. Patent 4,410,686 to make a 3000 gram batch of polymer concrete. A 330.0 gram (11 percent) sample of the resin was catalyzed with 2 percent methyl ethyl ketone peroxide and 1 percent cobalt napthenate solution as in Control A.

34,379-F

Following the procedure of Control A, 8.9 percent silica flour, 17.8 percent of number 5 blasting sand, and 62.3 percent of 1/8 to 1/4 inch (0.31-0.64 cm) gravel was added to the catalyzed resin and the mixture was molded and cured for 16 hours at 23°C. The samples were then post cured in an oven at 65°C for 16 hours and then cooled to room temperature (23°C). Three test specimens were made and the bond strength (psi) (kPa) and percent bonding reported in Table VI is the average.

## Example 19

The procedure of Control I was repeated with the addition of 3.1 percent polystyrene. The resulting averages of three specimens are set forth in Table VI.

## Control J

The procedure of Control G was repeated using an unsaturated vinyl ester resin (DERAKANE® 411-45) from The Dow Chemical Company to make a 3000 gram batch of polymer concrete. A 330.0 gram (11 percent) sample of the resin was catalyzed with 2 percent methyl ethyl ketone peroxide and 1 percent cobalt napthenate solution as in Control A.

Following the procedure of Control A, 8.9 percent silica flour, 17.8 percent of number 5 blasting sand, and 62.3 percent of 1/8 and 1/4 inch (0.31-0.64 cm) gravel was added to the catalyzed resin and the mixture was molded and cured for 16 hours at 23°C. The samples were then post cured in an oven at 65°C for 16 hours and then cooled to room temperature (23°C). Three test specimens were made and the bond strength (psi) (kPa) and percent bonding reported in Table VI is the average.

34,379-F

Example 20

The procedure of Control J was repeated with the addition of 3.1 percent polystyrene.  The resulting averages of three specimens are set forth in Table VI.

Table VI

| Runs | % Resin | % S.F. | % Sand | % Gravel | % P.S. | (psi) (kPa) | Bonding |
|---|---|---|---|---|---|---|---|
| Control G | 11 | 8.9 | 17.8 | 62.3 | 0 | 689 (4750) | 0 |
| Example 17 | 11 | 8.6 | 17.2 | 60.1 | 3.1 | 3522 (24284) | 5 |
| Control H | 11 | 8.9 | 17.8 | 62.3 | 0 | 358 (2468) | 0 |
| Example 18 | 11 | 8.6 | 17.2 | 60.1 | 3.1 | 1637 (11287) | 100 |
| Control I | 11 | 8.9 | 17.8 | 62.3 | 0 | 2925 (20168) | 0 |
| Example 19 | 11 | 8.6 | 17.2 | 60.1 | 3.1 | 3585 (24719) | 100 |
| Control J | 11 | 8.9 | 17.8 | 62.3 | 0 | 1175 (8102) | 0 |
| Example 20 | 11 | 8.6 | 17.2 | 60.1 | 3.1 | 3712 (25594) | 100 |

* % Bonding = % of Portland Cement Remaining on the Face of the Polymer Concrete Half Cylinder after Break.

Table VI shows that the addition of polystyrene in the proposed system enhances bond strength (psi) (kPa) and percent bonding to portland cement concrete.

CLAIMS:

1.  A process for the preparation of a polymer concrete which comprises the steps of

   A)   mixing a curing catalyst with an unsaturated resin selected from unsaturated polyesteramide resins, unsaturated polyester resins and unsaturated vinylester resins dissolved in one or more ethylenically unsaturated monomers to provide a catalyzed resin,

   B)   mixing said catalyzed resin with aggregates and fillers to provide a curable polymer concrete blend, and

   C)   curing said concrete blend,

characterised in that the catalyzed resin is mixed with finely divided polystyrene before curing the concrete blend.

2.  A process as claimed in Claim 1, wherein said unsaturated resin contains 0.1 to 60 percent by weight of a urethane oligomeric flexibilizer.

3.  A process as claimed in Claim 1 or Claim 2, wherein said polyesteramide resin is a dicyclopentadiene modified polyesteramide.

4.  A process as claimed in any one of the preceding claims, wherein the unsaturated resin is dissolved in one or more vinyl monomers.

5.    A process as claimed in Claim 4, wherein the unsaturated resin is dissolved in one or more alkenyl aromatic monomers.

6.    A process as claimed in Claim 5, wherein the unsaturated resin is dissolved in styrene.

7.    A process as claimed in any one of the preceding claims, wherein the polystyrene has a particle size less than 100 micrometres.